# FASCICULE DE BREVET EUROPEEN

(11) **EP 0 816 704 B1**
(45) Date de publication et mention de la délivrance du brevet: **08.12.1999**
(21) Numéro de dépôt: 97401373.2
(22) Date de dépôt: 17.06.1997
(51) Int. Cl.: F16D 23/06

(54) **Synchroniseur double pour l'accouplement alternatif de deux pignons à un arbre de boîte de vitesses**
Doppelsynchronisiereinrichtung zur wahlweise Anschaltung zweier Zahnräder an einer Getriebewelle
Double synchroniser for alternatively connecting two gears to a gear box shaft

(30) Priorité: 20.06.1996 FR 9607663
(43) Date de publication de la demande: 07.01.1998
(73) Titulaire: AUTOMOBILES PEUGEOT, 75116 Paris (FR); AUTOMOBILES CITROEN, 92200 Neuilly-sur-Seine (FR)
(72) Inventeur: Le Doare, Jean-Yves, 94400 Vitry sur Seine (FR)
(74) Mandataire: Gendraud, Pierre

(56) Documents cités:
- DE-A- 2 252 520
- DE-B- 1 061 631
- DE-C- 960 961
- GB-A- 403 319
- US-A- 5 269 400

## Description

L'invention est relative à un synchroniseur double pour l'accouplement alternatif de deux pignons à un arbre de boîte de vitesses.

Elle concerne plus précisément un synchroniseur du type dans lequel un manchon de commande monté coulissant par des cannelures sur un moyeu fixé à l'arbre entre les deux pignons tournant librement sur celui-ci est mobile axialement d'une position centrale de point mort à l'une ou l'autre de deux positions extrêmes de crabotage de ses cannelures avec l'une ou l'autre de deux dentures respectivement solidaires des pignons, tandis que deux bagues de synchronisation sont interposées respectivement entre l'un de ces pignons et le moyeu et liées en rotation à celui-ci avec un jeu angulaire en étant chacune propre à entraîner en rotation par friction le pignon adjacent lorsqu'elle est poussée axialement vers lui par le manchon s'écartant de sa position centrale, par l'intermédiaire d'un moyen d'armement qui s'éclipse dès que la bague s'immobilise axialement contre le pignon et qui assure en outre le maintien axial du manchon en position centrale.

Un tel moyen d'armement connu par le brevet FR 2 641 350 comporte plusieurs poussoirs radiaux portés par le moyeu à sa périphérie et poussant chacun une bille contre une piste axiale intérieure crantée du manchon, chaque bille étant juxtaposée à une saillie latérale d'une des deux bagues, et ces poussoirs, billes et saillies étant répartis régulièrement et alternativement autour de l'axe de l'arbre en constituant deux séries associées chacune au synchroniseur de l'un des deux pignons.

L'invention vise à réaliser un double synchroniseur plus simple et plus compact que le dernier susmentionné grâce notamment à l'adaptation d'un moyen d'armement à jonc annulaire connu par le brevet FR 851547 concernant un synchroniseur d'un autre type, à moyeu coulissant sur l'arbre et ne participant donc pas au maintien du manchon à sa position centrale de point mort. Un tel jonc selon le préambule de la revendication 1, est décrit par exemple dans DE-C-960961.

L'invention se rapporte donc à un double synchroniseur du type susmentionné à moyeu fixé sur l'arbre et à moyen éclipsable d'armement du synchroniseur et de maintien du manchon en position centrale de point mort, ce moyen éclipsable étant constitué d'un jonc annulaire métallique logé dans une gorge périphérique centrale du moyeu et engagé dans plusieurs crans intérieurs médians du manchon quand celui-ci est en position centrale, caractérisé en ce que cette gorge délimite deux couronnes dentées coopérant avec les cannelures intérieures du manchon, ces deux couronnes étant formées chacune de plusieurs secteurs dentés régulièrement répartis en alternance avec ceux de l'autre couronne, et en ce que le jonc est maintenu axialement par plusieurs plots saillant latéralement chacun d'un des secteurs dentés, et est propre à s'éclipser hors des crans du manchon par déformation élastique due à son appui axial sur plusieurs saillies latérales de l'une ou l'autre des deux bagues quand le manchon est déplacé vers le pignon adjacent à cette bague.

Selon quelques dispositions intéressantes de l'invention :
- les saillies latérales des bagues s'étendent chacune entre deux secteurs dentés de la couronne adjacente et sont régulièrement réparties en alternance avec les plots de l'autre couronne ;
- le jonc est fendu et maintenu en rotation par appui de ses deux extrémités sur une butée située dans la gorge du moyeu.
- les plots et la butée constituent des extensions axiales de dents des secteurs dentés.

Un mode de réalisation du double synchroniseur selon l'invention est décrit ci-après avec référence aux dessins annexés parmi lesquels :
- la figure 1 est une vue en coupe axiale du double synchroniseur associé à deux pignons ;
- la figure 2 est une vue de côté du moyeu du synchroniseur, équipé d'un jonc d'armement ;
- la figure 3 est une vue de côté d'une bague de friction du synchroniseur ;
- la figure 4 est une vue en perspective du moyeu de la figure 2;
- la figure 5 est une vue de gauche par rapport à la figure 3.

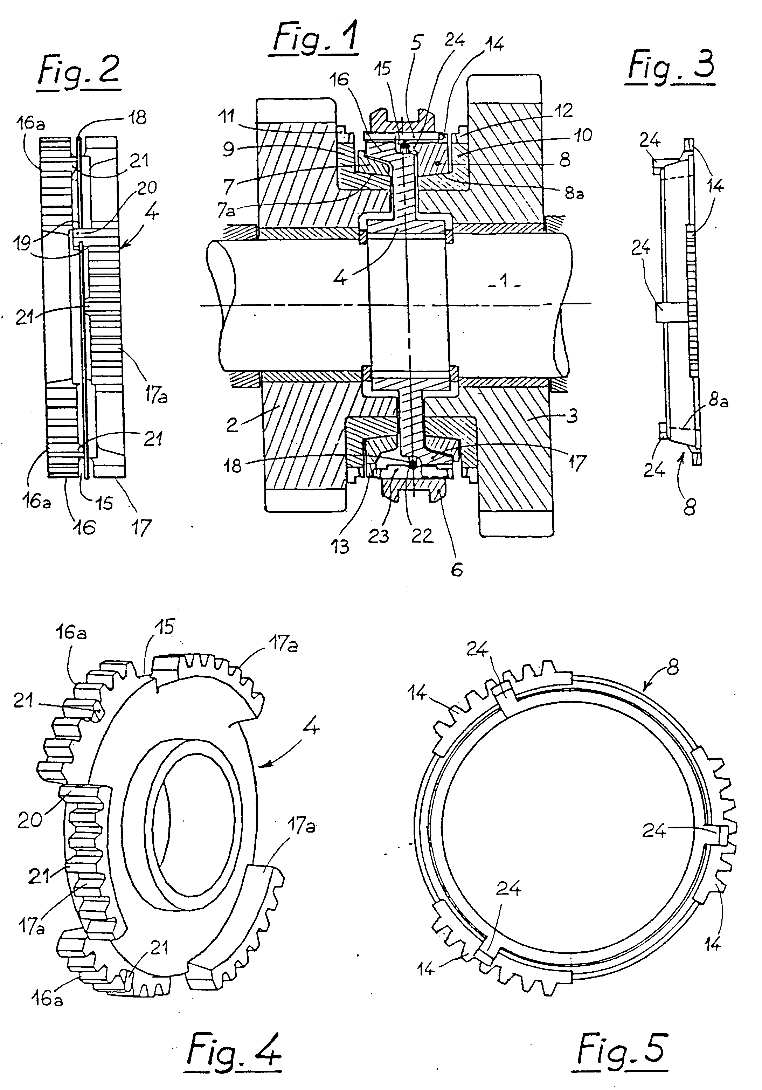

On voit sur la figure 1, fixé à un arbre 1 d'une boîte de vitesses entre deux pignons 2 et 3 montés libres en rotation et immobiles axialement sur cet arbre, un moyeu 4 sur lequel peut coulisser axialement par des cannelures 5 un manchon de commande 6.

Entre le moyeu 4 et chaque pignon 2 ou 3 est interposée axialement avec jeu une bague de friction 7 ou 8 dont une face interne tronconique 7a ou 8a est propre à coopérer avec une face extérieure complémentaire agencée sur une pièce annulaire 9 ou 10 solidaire du pignon adjacent 2 ou 3. Cette pièce 9 ou 10 comporte une denture extérieure 11 ou 12 de crabotage apte à coopérer avec les cannelures internes 5 du manchon quand celui-ci est déplacé vers le pignon 2 ou 3 correspondant, et la bague 7 ou 8 comporte une denture extérieure 13 ou 14 engagée avec jeu dans ces cannelures 5 de manière à accoupler avec jeu angulaire la bague et le moyeu, de façon non détaillée ici car usuelle dans les synchroniseurs de ce type.

Une gorge centrale périphérique 15 du moyeu délimite deux couronnes 16 et 17 dentées extérieurement de manière à coulisser dans les cannelures 5 du manchon. Ces couronnes sont formées chacune, comme visible à la figure 4, de trois secteurs dentés 16a régulièrement répartis en alternance avec trois secteurs dentés 17a de l'autre couronne.

Un jonc annulaire métallique fendu 18 est logé dans la gorge 15 et immobilisé en rotation par mise en appui de ses deux extrémités 19 sur une butée 20 formée dans cette gorge par une extension axiale d'une dent du moyeu 4. Il est de plus maintenu axialement, c'est-à-dire parallèlement à l'axe de l'arbre, par plusieurs plots 21 saillant latéralement de chaque secteur denté 16a, 17a, et engagé par sa périphérie, quand le manchon 6 est en position centrale, dans plusieurs crans 22 pratiqués respectivement au milieu d'une extension radiale interne 23 de plusieurs cannelures du manchon.

Chaque bague de friction 7 ou 8 est munie de plusieurs saillies latérales 24 qui s'étendent chacune, au niveau du jonc 18, dans un évidement séparant deux secteurs dentés de la couronne adjacente.

Quand le manchon 6 est en position centrale de point mort représentée à la figure 1, le jonc 18 est engagé dans les crans 22, ce qui maintient axialement le manchon puisque le jonc est lui-même maintenu latéralement par les plots 21 du moyeu 4 fixé à l'arbre, comme visible à la figure 2.

Quand le manchon 6 est déplacé axialement, par exemple vers le pignon 3, le jonc 18 entraîné par les crans 22 du manchon pousse par les saillies 24 la bague 8 jusqu'à mise en contact de sa face tronconique 8a avec celle de la pièce 10 solidaire du pignon 3. La synchronisation s'effectue par friction de ces faces et le manchon peut poursuivre sa course de coulissement axial jusqu'au crabotage de ses cannelures avec la denture 12 grâce à l'éclipsage du jonc 18 hors des crans 22, cet éclipsage radial centripète s'effectuant grâce à la déformation élastique du jonc qui prend une forme ondulée entre les crans 22 qui le poussent vers le pignon 3 à accoupler et les plots 21 immobiles axialement qui le retiennent.

Cet agencement du jonc dans la gorge du moyeu axialement fixe constitue ainsi un moyen simple et compact d'armement pour la synchronisation lors de l'accouplement de l'un ou l'autre des deux pignons, et de maintien du manchon en position centrale de point mort.

## Revendications

1. Synchroniseur double pour l'accouplement alternatif de deux pignons à un arbre de boîte de vitesses, dans lequel un manchon de commande (6) monté coulissant par des cannelures (5) sur un moyeu (4) fixé à l'arbre entre les deux pignons (2,3) tournant librement sur celui-ci est mobile axialement d'une position centrale de point mort à l'une ou l'autre de deux positions extrêmes de crabotage de ses cannelures (5) avec l'une ou l'autre de deux dentures (11,12) respectivement solidaires de l'un des deux pignons, tandis que deux bagues de synchronisation (7,8) sont interposées respectivement entre l'un de ces pignons (2,3) et le moyeu (4) et qu'un moyen éclipsable (18) est propre à assurer le maintien du manchon (6) en position centrale et l'armement de l'une ou l'autre des bagues de synchronisation (7,8) quand le manchon est écarté de sa position centrale, ce moyen éclipsable étant constitué d'un jonc annulaire métallique (18) logé dans une gorge périphérique centrale (15) du moyeu (4) et engagé dans plusieurs crans intérieurs médians (22) du manchon (6) quand celui-ci est en position centrale,
caractérisé en ce que cette gorge (15) délimite deux couronnes dentées (16,17) coopérant avec les cannelures intérieures (5) du manchon, ces deux couronnes étant formées chacune de plusieurs secteurs dentés (16a,17a) régulièrement répartis en alternance avec ceux de l'autre couronne, et en ce que le jonc (18) est maintenu axialement par plusieurs plots (21) saillant latéralement chacun d'un des secteurs dentés, et est propre à s'éclipser hors des crans (22) du manchon par déformation élastique due à son appui axial sur plusieurs saillies latérales (24) de l'une ou l'autre des deux bagues (7,8) quand le manchon (6) est déplacé vers le pignon (2,3) adjacent à cette bague.

2. Synchroniseur selon la revendication 1,
caractérisé en ce que les saillies latérales (24) des bagues (7,8) s'étendent chacune entre deux secteurs dentés (16a ou 17a) de la couronne adjacente (16 ou 17) et sont régulièrement réparties en alternance avec les plots (21) de l'autre couronne.

3. Synchroniseur selon l'une des revendication 1 et 2,
caractérisé en ce que le jonc (18) est fendu et maintenu en rotation par appui de ses deux extrémités (19) sur une butée (20) située dans la gorge (15) du moyeu (4).

4. Synchroniseur selon la revendication 3,
caractérisé en ce que les plots (21) et la butée (20) constituent des extensions axiales de dents des secteurs dentés (16a,17a).

## Patentansprüche

1. Doppelsynchronisiereinrichtung zum wechselweisen Ankoppeln zweier Zahnräder bzw. Ritzel an eine Getriebewelle, worin eine Steuermuffe (6), die durch Längsrillen (5) auf einer Nabe (4) verschieblich angebracht ist, die auf der Weile zwischen den beiden Ritzeln (2, 3) befestigt ist, die sich auf dieser frei drehen, axial aus einer mittleren Totpunktlage nach der einen oder der anderen zweier Endlagen des Klaueneingriffs ihrer Rillen (5) in die eine oder andere zweier Verzahnungen (11. 12) beweglich ist, die jeweils fest einem der beiden Ritzel zugeordnet sind, während zwei Synchronisierungsringe (7, 8) jeweils zwischen einem dieser Ritzel (2, 3) und der Nabe (4) angeordnet sind, und daß einrastbare Mittel (18) dazu eingerichtet sind, die Halterung der Muffe (6) in der Mittellage und die Inbetriebnahme des einen oder anderen Synchronisierungsringes (7, 8) sicherzustellen, wenn die Muffe aus ihrer Mittellage wegbewegt wird, wobei diese einrastbaren Mittel von einem ringförmigen Metailstab (18) gebildet sind, der in einer mittigen Umfangsnut (15) der Nabe (4) sitzt und in mehrere innere, mittlere Rastkerben (22) der Muffe (6) eingreift, wenn sich diese in der Mittellage befindet,
dadurch gekennzeichnet, daß diese Nut (15) zwei Zahnkränze (16, 17) begrenzt, die mit den inneren Rilien (5) der Muffe zusammenwirken, wobei diese beiden Zahnkränze jeweiis aus mehreren verzahnten Sektoren (16a, 17a) gebildet sind, die mit denen des anderen Zahnkranzes abwechselnd und regelmäßig verteilt sind, und daß der Stab (18) axial durch mehrere Klötze (21) gehalten ist, die jeweils von einem der verzahnten Sektoren seitlich vorspringen, und dazu eingerichtet ist, sich aus den Rastvertiefungen (22) der Muffe durch elastische Verformung infolge seiner axialen Anlage auf mehreren seitlichen Vorsprüngen (24) des einen oder anderen der beiden Ringe (7, 8) zu lösen, wenn die Muffe (6) zu dem Ritzel (2, 3) hin verlagert wird, das diesem Ring benachbart ist.

2. Synchronisiereinrichtung nach Anspruch 1,
dadurch gekennzeichnet, daß sich die seitlichen Vorsprünge (24) der Ringe (7, 8) jeweils zwischen zwei verzahnten Sektoren (16a oder 17a) des benachbarten Kranzes (16, 17) erstrecken und mit den Klötzen (21) des anderen Kranzes abwechselnd regelmäßig verteilt sind.

3. Synchronisiereinrichtung nach einem der Ansprüche 1 oder 2,
dadurch gekennzeichnet, daß der Stab (18) geschlitzt ist und durch Anlage seiner beiden Enden (19) auf einem Anschlag (20) in Drehung gehalten ist, der in der Nut (15) der Nabe (4) gelegen ist.

4. Synchronisiereinrichtung nach Anspruch 3,
dadurch gekennzeichnet, daß die Klötze (21) und der Anschlag (20) axiale Verlängerungen der Zähne der verzahnten Sektoren (16a, 17a) bilden.

## Claims

1. Double synchroniser for the alternating coupling of two gear wheels to a gearbox shaft, in which a control sleeve (6), mounted so as to slide via channels (5) on a hub (4) fixed to the shaft between the two gear wheels (2, 3) rotating freely thereon, is mobile axially from a central dead-centre position to one or other of the two extreme positions in which its channels (5) are positively locked with one or other of two toothings (11, 12), which are integral, respectively, with one of the two gear wheels, while two synchronisation rings (7, 8) are interposed respectively between one of these gear wheels (2, 3) and the hub (4) and while a retractable means (18) is suitable for ensuring the maintenance of the sleeve (6) in a central position and the activation of one or other of the synchronisation rings (7, 8) when the sleeve is moved away from its central position, this retractable means being constituted by an annular metal retaining ring (18) housed in a central peripheral groove (15) of the hub (4) and engaged in several internal median notches (22) of the sleeve (6) when said sleeve is in the central position,
characterised in that this groove (15) delimits two toothed crown wheels (16, 17) co-operating with the internal channels (5) of the sleeve, these two crown wheels each being formed of several toothed sectors (16a, 17a) regularly distributed, alternating with those of the other crown wheel, and in that the retaining ring (18) is maintained axially by several studs (21) each projecting laterally from one of the toothed sectors, and is capable of being retracted out of the notches (22) of the sleeve by elastic deformation due to its axial bearing on several lateral projections (24) of one or other of the two rings (7, 8) when the sleeve (6) is displaced towards the gear wheel (2, 3) adjacent to this ring.

2. Synchroniser according to Claim 1,
characterised in that the lateral projections (24) of the rings (7, 8) each extend between two toothed sectors (16a or 17a) of the adjacent crown wheel (16 or 17) and are regularly distributed, alternating with the studs (21) of the other crown wheel.

3. Synchroniser according to one of Claims 1 and 2,
characterised in that the retaining ring (18) is split and maintained in rotation by bearing of its two ends (19) against a stop (20) located within the groove (15) of the hub (4).

4. Synchroniser according to Claim 3,
characterised in that the studs (21) and the stop (20) constitute axial extensions of teeth of the toothed sectors (16a, 17a).
